# EUROPEAN PATENT SPECIFICATION

(11) **EP 0 409 286 B1**
(45) Date of publication and mention of the grant of the patent: **21.06.1995**
(21) Application number: 90116144.8
(22) Date of filing: 29.07.1985
(51) Int. Cl.: H02H 7/085, H02P 7/48

(54) **Overheat preventing system of A.C. motor**
Überhitzungsschutz für Wechselstrommotor
Système de protection contre la surchauffe pour un moteur à courant alternatif

(30) Priority: 28.07.1984 JP 158273/84; 28.07.1984 JP 158274/84; 18.01.1985 JP 7703/85; 18.01.1985 JP 7704/85; 18.01.1985 JP 7705/85; 18.01.1985 JP 7706/85
(43) Date of publication of application: 23.01.1991
(62) Divisional of application: 85305375.9
(73) Proprietor: MITSUBISHI DENKI KABUSHIKI KAISHA, Tokyo (JP)
(72) Inventor: Takada, Nobuharu, c/o Power and Industrial Systems, 1-chome, Hyogo-ku, Kobe City, Hyogo Pref (JP); Hirosaki, Yoshihiko, c/o Power and Indus. Systems, 1-chome, Hyogo-ku, Kobe City, Hyogo Pref (JP)
(74) Representative: Hackett, Sean James

(56) References cited:
- FR-A- 2 505 940
- FR-A- 2 510 841
- MESSEN + PRÜFEN/AUTOMATIK, no. 6, June 1974, pages 361-367; A. ZIERMANN: "DerEin-Aus-Regler im Vergleich zum stetigen Regler"

## Description

### Background of the Invention

This invention relates to a system preventing overheat of an A.C. motor.

When the number of poles of an A.C. motor is switched to drive the A.C. motor, overheating can occur in the A.C. motor if the switching is not proper. This will be described below.

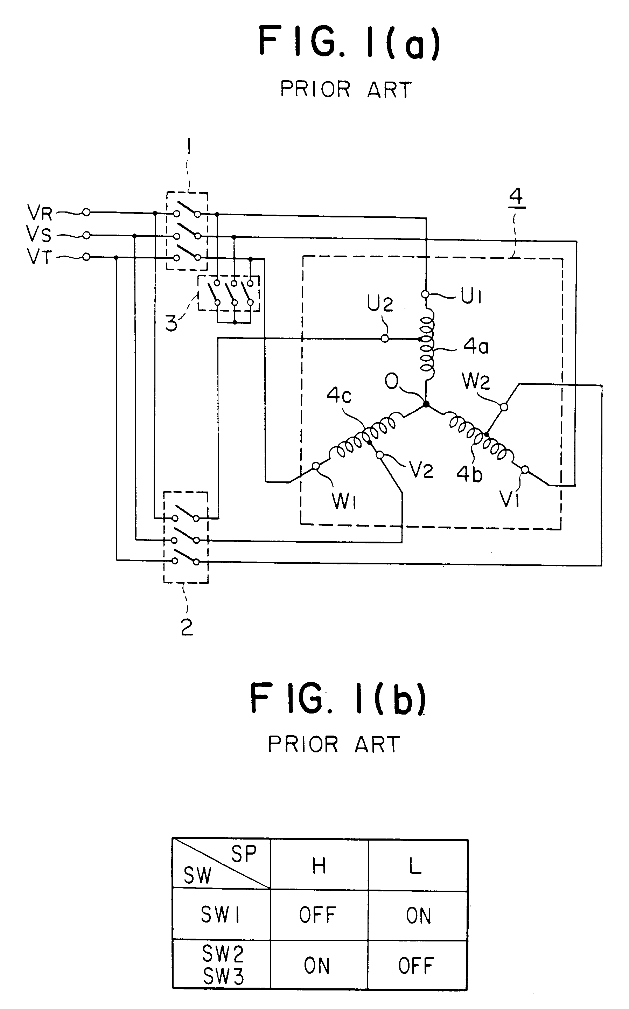

Fig. 1(a) shows a wiring diagram of a prior art pole change motor. In Fig. 1(a), reference characters V_{R}, V_{S}, V_{T} denote R-phase voltage, S-phase voltage, T-phase voltage, respectively of a three-phase A.C. power source, reference numerals 1, 2, 3 denote switches, reference numeral 4 denotes a pole change motor, reference numerals 4a, 4b, 4c denote the coils of the pole change motor 4, reference characters U₁, V₁, W₁ denote the terminals of the coils 4a, 4b, 4c, reference characters U₂, V₂, W₂ denote the intermediate terminals of the coils 4a, 4b, 4c, and reference numeral 0 denotes the neutral point of the Y-connected coils 4a, 4b, 4c.

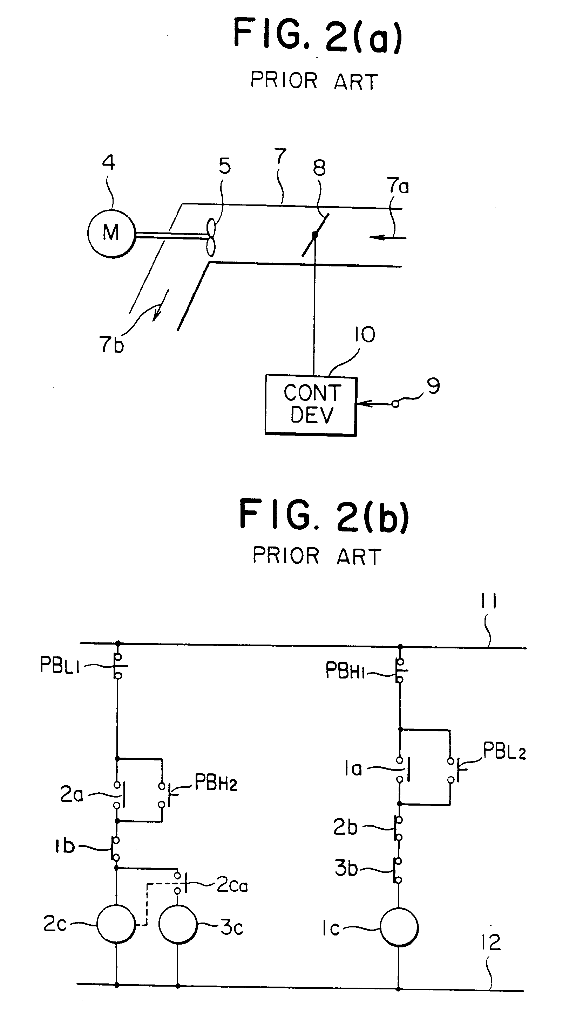

Fig. 2(a) shows an example of a conventional system for driving a fan by using a pole change motor. In Fig. 2(a), reference numeral 5 designates a fan, reference numeral 7 designates an air duct, reference characters 7a, 7b designate an inlet and an outlet, respectively of the air duct 7, reference numeral 8 designates an inlet vane for regulating the wind volume of the air duct 7, reference numeral 9 designates a wind volume command signal required by a system, and reference numeral 10 designates a controller for operating the opening of the inlet vane 8 upon receiving of the wind volume command signal 9. Fig. 2(b) shows a wiring diagram of the control circuit of the abovementioned system. Reference numerals 11, 12 designate control power sources, reference characters 1a, 2a designate contacts which become ON when the switches 1, 2 are closed, reference characters 1b, 2b, 3b designate contacts which becomes ON when the switches 1, 2, 3 are open, reference characters 1c, 2c, 3c designate operating coils (for closing the switches 1, 2, 3 when energized) of the switches 1, 2, 3, and reference characters PB_{H}, PB_{L} designate push-button switches which produce high and low speed operation commands, respectively of the motor.

The operation of the motor will now be described. In Fig. 1(a), the states of the switches at high and low speed times are as follows:

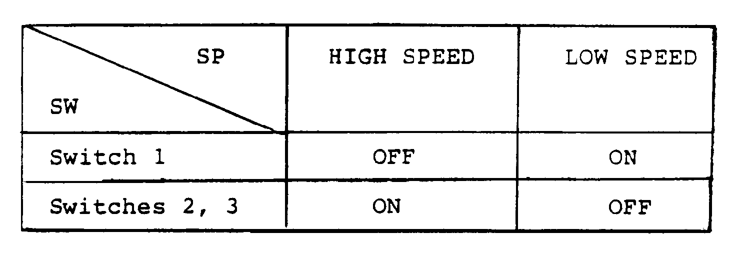

The voltages V_{R}, V_{S}, V_{T} of the three-phase A.C. power source are applied to the coil terminals U₁, V₁, W₁, respectively of the pole change motor 4 during low speed operation, and the coils 4a, 4b, 4c are connected at the neutral point 0 in a Y-connection.

On the other hand, the voltages V_{R}, V_{S}, V_{T} of the three-phase power source are applied to the intermediate terminals U₂, V₂, W₂, respectively of the coils 4a, 4b, 4c during high speed operation to form a Y-connection with the neutral point 0 as a center and a Y-connection with the neutral point formed by the closure of the switch 3.

Thus, the intermediate terminals are provided in the windings of the motor to form a pole change motor by switching the currents flowing to the coils.

In Fig. 2(a), showing an example of the conventional system for driving the fan 5 by the above pole change motor 4, the air is fed by the fan 5 from the inlet 7a of the air duct 7 to the outlet 7b. The wind volume passing the air duct 7 is controlled by applying the wind volume command signal 9 from the system to the controller 10 which converts the signal to a value adapted to control the inlet vane 8 and controls the opening of the inlet vane 8.

Heretofore, the switching of the pole number of the pole change motor 4 has been performed manually in the following sequence.

When the push-button switches PB_{H1}, PB_{H2} are pressed during low speed operation, the voltage of the coil 1c becomes zero by the opening of the switch PB_{H1} to effect opening of the switch 1, and the contact 1b is simultaneously closed. Thus, the push-button switch PB_{H2} for bypassing the contact 2a is closed, the coil 2c and then the coil 3c are energized to close the switches 2, 3, thereby switching the motor to the high speed operation. The push-button switch PB_{H2} is reset when the switch is released, but the high speed operation is continued by the closure of the contact 2a. In contrast, when the push-button switches PB_{L1}, PB_{L2} are pressed during high speed operation, the voltage of the coils 2c,3c becomes zero by the opening of the push-button switch PB_{L1} to close the contacts 2b, 3b. Thus, the voltages of the control power sources 11, 12 are applied to the coil 1c to close the switch 1, thereby switching the motor to the low speed operation. The push-button switch PB_{L2} is reset when the switch is released, but the low speed operation is continued by the contact 1a.

Since the operating system of the conventional pole change motor is constructed for manual switching as described above, it can happen that, when an output higher than the output sufficient to operate the motor at the low speed is required when the motor is operated at the low speed, the switching of the motor to the high speed is delayed, or the motor is not switched to the high speed operation due to a careless operator. Thus, the conventional motor has the disadvantage that the operator must always observe the operation of the conventional pole change motor. Further, since the switching of the motor to the low speed operation can be delayed (when, during high speed operation, the required output is such that the motor can be operated at the low speed), the conventional pole change motor has the disadvantage that electric power energy cannot be saved.

US Patent Specification 4225289 relates to a system for controlling air flow in two different ways depending on whether the air flow is above or below a predetermined value. One way is by controlling the speed of a motor, and the other by controlling a damper.

German Patent Specification DE 3243922 relates to the control of air flow rates of blowers and fans. One control device described includes means for varying the number of poles of the motor and supplying power of variable frequency and voltage to control the motor speed.

French Patent Specification 2510841 relates to a pole amplitude modulated motor, the speed of which can be varied by means of a speed switch, the motor having the features defined in the preamble of Claim 1 below. The air flowing through an exhaust duct is varied by varying the speed of a fan (driven by means of the motor) and a damper. Switching between high and low speed is inhibited unless sets of external permissive signals, indicating desired external conditions, are present.

### Summary of the Invention

This invention has for its object to provide an overheat preventing system for a pole change A.C. motor wherein the motor can be automatically efficiently switched so as not to overheat and save electric power energy.

According to the present invention, there is provided an overheat preventing system of a pole change motor A.C. motor having power source switching means for high speed operation and low speed operation;
a load driven by the output of the motor;
operating means for automatically operating the switching means;
and means including limiting means for limiting the operation of the operating means; characterised in that the operating means is operative for detecting a first value (ϑ₁) of the load of the motor at the low speed operation time thereby operating the switching means to switch the motor to the high speed operation, and for detecting a second value (ϑ₂) of the load of the motor at the high speed operation time thereby operating the switching means to switch the motor to the low speed operation, wherein the limiting means is operative for preventing operation of the switching means for a predetermined time after switching to high speed operation from low speed operation.

### Brief Description of the drawings

Fig. 1(a) is a circuit diagram of a prior art pole change motor;
Fig. 1(b) is a view of the operation of a switch of a motor circuit of Fig. 1(a);
Fig. 2(a) is an explanatory view for explaining the drive of a fan by the above motor;
Fig. 2(b) is a circuit diagram of a prior-art operating circuit for switching the pole number of the above motor;
Fig. 3 is an explanatory view for explaining the drive of a fan by a pole change motor and the automatic switching of the pole number of the pole change motor;
Fig.4 is a characteristic diagram for explaining the switching of the pole number of Fig. 3; and
Figs. 5 to 7 are circuit diagrams showing embodiments of the present invention and operating circuits for switching the pole number of a pole change motor.

In the drawings, the same symbols indicate the same parts.

### Description of the Preterred Embodiments

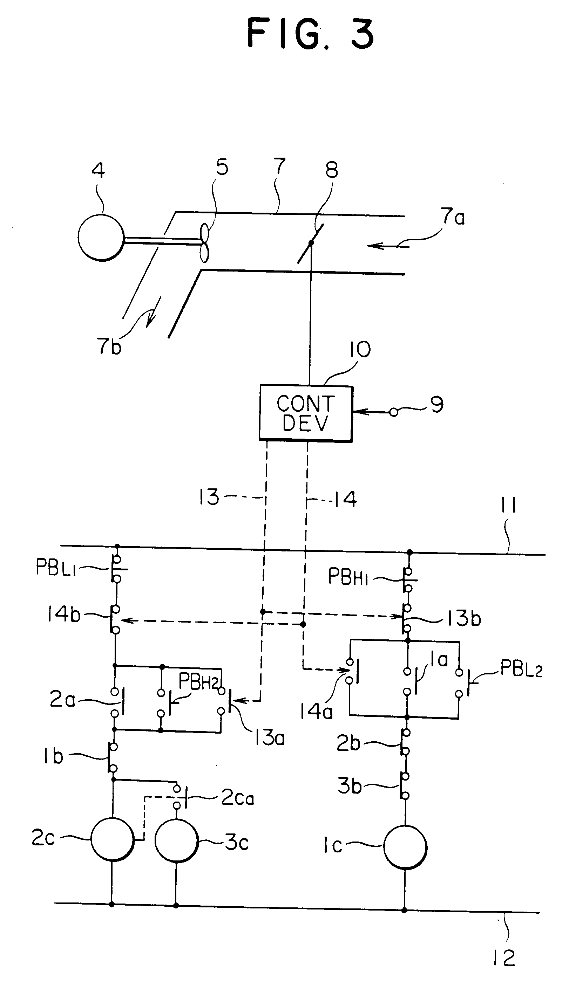

Embodiments of the present invention will be described in detail with reference to the accompanying drawings. Fig. 3 shows a circuit for controlling the drive of a fan by switching of the pole number of a pole change motor. In Fig. 3, reference numeral 13 designates an output signal of a first step detector (not shown) for outputting a signal for a predetermined period of time when an opening signal of an inlet vane 8 of a controller 10 becomes a first predetermined value or higher, reference numeral 14 designates an output signal of a second step detector (not shown) for outputting a signal for a predetermined period of time when the opening signal of the inlet vane 8 becomes a second predetermined value or lower, reference characters 13a, 14a designate contacts closed when the first or second output signal 13, 14 is outputted, and reference characters 13b, 14b designate contacts opened when the first or second output signal 13, 14 is outputted.

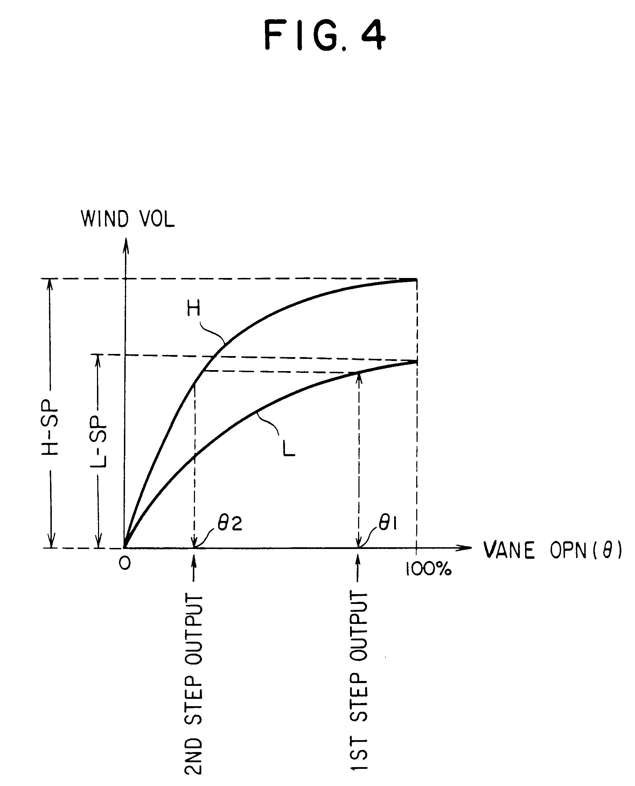

The same reference numerals and characters as those of Figs 2(a) and 2(b) denote the same elements. Fig. 4 is a view for explaining the detecting sensitivity of the abovementioned first and second detectors, reference characters H, L are curves indicating the relationship between the opening of the vane and the output wind volume, and reference characters ϑ₁, ϑ₂ are set values of the openings corresponding to the first and second opening signals.

When the opening signal to the inlet vane 8 of the controller 10 exceeds the vane opening ϑ₁ set to the first detector during low speed operation, the first detector outputs a signal 13 for a predetermined period of time, the contact 13a is closed and the contact 13b is opened during this period. Thus, the voltage of the coil 1c becomes zero to open the switch 1 and to close the contact 1b. Accordingly, the signal 13 performs the same effect as when the push-button switch PB_{H2} is pressed in the description with respect to Fig. 2(b), thereby automatically switching to the high speed operation.

When the opening signal to the inlet vane 8 of the controller 10 becomes the vane opening ϑ₂ or lower set to the second step detector 14 during high speed operation, the second step detector outputs a signal 14 for a predetermined period of time, the contact 14a is closed and the contact 14b is opened during this period. Thus, the voltage of the coils 2c, 3c becomes zero to open the switches 2, 3 and to close the contacts 2b, 3b. Accordingly, the signal 14 performs the same effect as when the push-button switch PB_{L2} is pressed in the description with respect to Fig. 2(b), thereby automatically switching to the low speed operation.

Fig. 4 is a view for explaining the set values ϑ₁, ϑ₂ of the first and second step detectors. The opening ϑ of the vane 8 is controlled from 0 to 100 %, and the curves H and L of Fig. 4 show the output wind volumes during high and low speed operation respectively.

When the first step detector is set to ϑ₁ in the vicinity of 100 % of the vane opening at low speed operation, the motor can be automatically switched to the high speed when the necessary system wind volume is raised to the vicinity of the upper output limit at low speed operation.

On the other hand, when the second step detector is set to the vane opening ϑ₂ corresponding to a wind volume at high speed operation which is smaller (but in the vicinity of) than the wind volume obtained by the opening ϑ₁ set by the first step detector at low speed operation, the motor can be automatically switched to the low speed when the necessary system wind volume is lowered to a value that can be obtained at low speed operation.

The reason why the wind volume obtained by the vane opening ϑ₂ at high speed operation is set to be smaller than that obtained by the vane opening ϑ₁ at low speed operation is because this prevents from again switching to the high speed operation immediately when the motor is switched from the high speed operation to the low speed operation.

As described above, the pole change motor 4 drives a fan 5. However, other rotor such as a pump or a compressor may also be driven in accordance with the present invention.

In the example above the opening of the inlet vane 8 of the fan 5 is detected by the first and second step detectors for detecting the output of the motor at the low and high speed operation times. However, the same effect can also be provided by using the voltage or current to presume the output of the rotor.

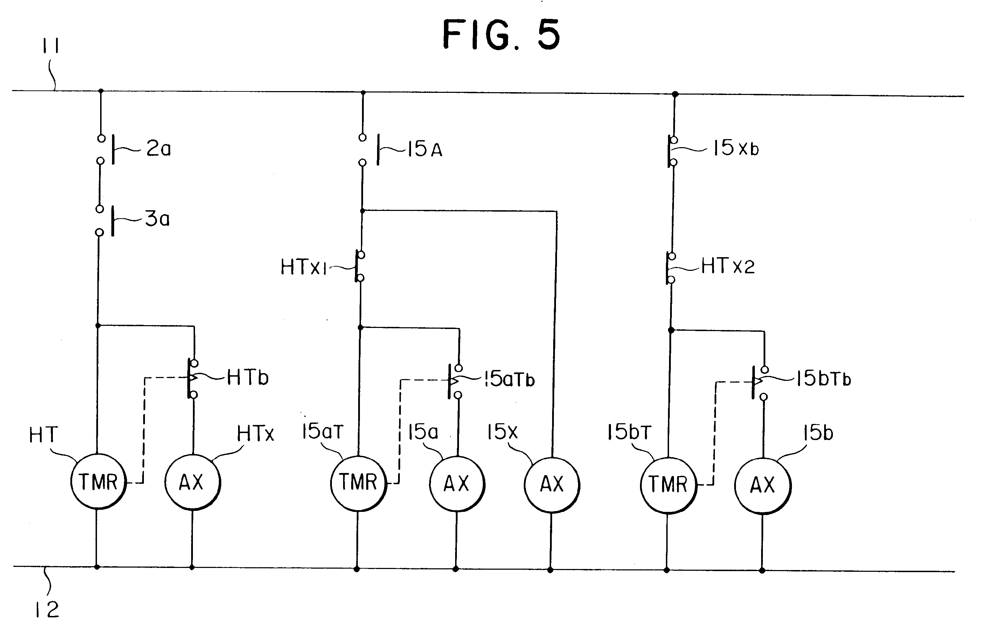

Overheat of the pole change motor can be prevented with the embodiment of the present invention shown in Fig. 5. In Fig. 5, reference characters HT, 15aT, 15bT designate timers, reference characters HTX, 15a, 15b, 15X designate auxiliary relays, HTX1, HTX2 designate the contacts of the auxiliary relay HTX, reference character 15Xb designates the b-contact of the auxiliary relay 15X, reference characters HTb, 15aTb, 15bTb designate the contacts of the timers HT, 15aT, 15bT, reference character 15A designates a contact closed when a load detector is operated, and reference characters 2a, 3a designate contacts becoming ON when the switches 2, 3 are closed.

Then, the operation of the circuit arrangement in Fig. 5 will be described.

When the load detector (not shown) operates to judge that the load should be operated in the high speed range, the contact 15A is closed, the auxiliary relay 15a is operated during the timer time of the timer 15aT under the condition that the auxiliary relay HTX is not operated. Thus, the a-contact 13a of Fig. 3 is closed during the timer time of the timer 15aT to open the switch 1 and to close the switches 2, 3.

Then, when the speed of the load is decelerated so that the load detector is reset, the auxiliary relay 15X is reset, and the auxiliary relay 15b is closed during the timer time of the timer 15bT under the condition that the auxiliary relay HTX is not operated. Thus, the a-contact 14a of Fig. 3 is closed during the timer time of the timer 15bT to open the switches 2, 3 and to close the switch 1.

When the load detector is operated to close the switches 2, 3, the contacts 2a, 3a are closed to operate the auxiliary relay HTX during the timer time of the timer HT, thereby stopping tne operations of the auxiliary relays 15a, 15b by the contacts HTX1, HTX2.

When the load detector is operated to close the switches 2, 3 to switch the load to the high speed operation, the operation of the auxiliary relay 15b is stopped by the opening of the contact HTX2 of the auxiliary relay HTX during the timer time of the timer HT even if the load detector is reset, thereby operating the auxiliary relay 15b after the timer time of the timer HT for sufficiently cooling the motor before switching the motor to the low speed.

The overheat of the motor is in general larger when the motor is switched from low speed to high speed than when the motor is switched from high speed to low speed. When the contact HTX2 is closed, the motor is immediately switched to the low speed when the load detector is reset, but the switching from the low speed to the high speed is stopped during the timer time of the timer HT by the contact HTX1 of the auxiliary relay HTX. The stop of the switching by the contact HTX1 prevents responding to an increase in the load in this case since the next switching to high speed operation is stopped, but electric power-saving is increased. On the other hand, stopping of the switching by the contact HTX2, permits to respond to an increase in the load since switching to the low speed operation is stopped, but electric power-saving is decreased. In other words, the stop of switching from high speed to low speed or vice versa is determined by the thought of which of the response to a load increase and the electric energy-saving is an important factor.

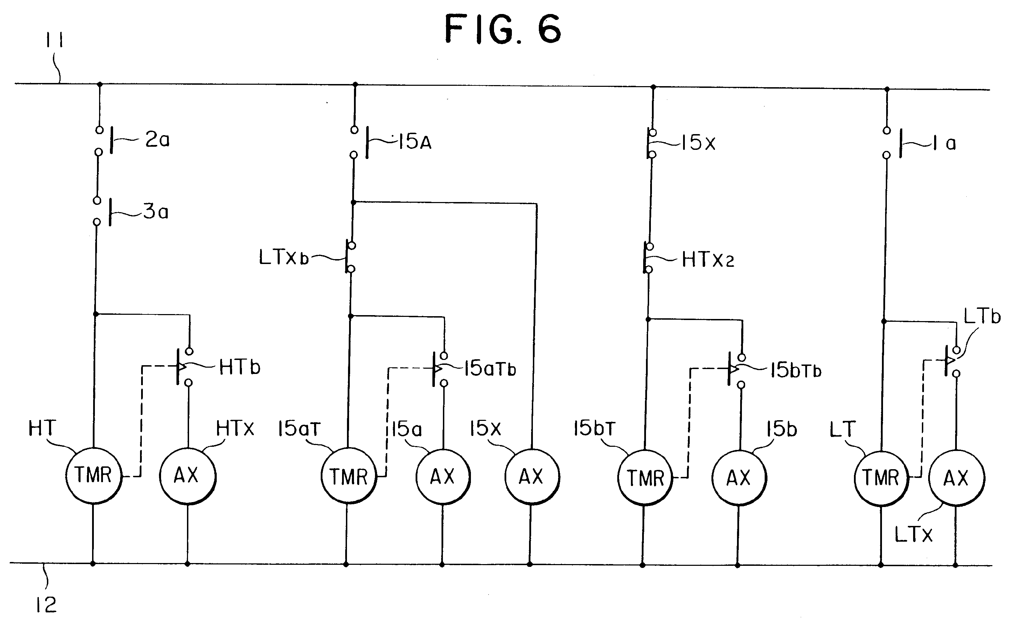

Fig. 6 shows another embodiment of Fig. 5 of the present invention, reference character LT designates a timer, and reference character LTX designates an auxiliary relay. This embodiment operates as follows. When a load detector is operated to close the switches 2, 3, the operation of the auxiliary relay 15b is stopped during the timer time of the timer HT by the auxiliary relay HTX to stop the switching to the low speed. When the load detector is reset to close the switch 1, the switching to the high speed is stopped by the opening of the contact LTXb during the timer time of the timer LT by the auxiliary relay LTX. This is because the overheat of the motor of the switching from the low speed to the high speed is larger than that of the switching reversely, and the operation is performed by setting the timers times of the timers to LT<HT.

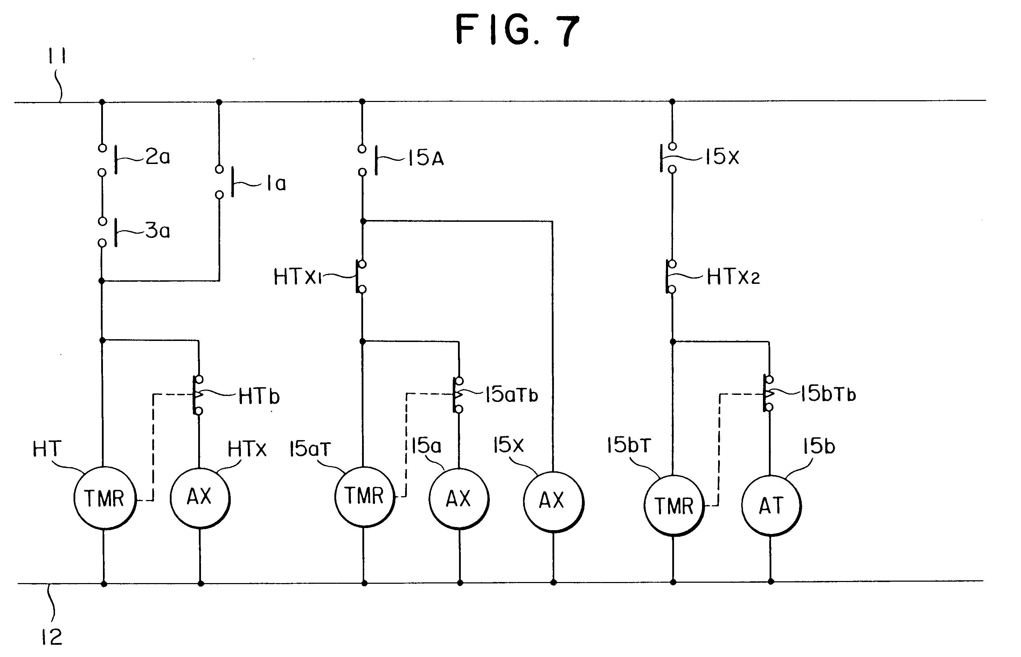

Fig. 7 shows still another embodiment of Fig. 5 of the present invention, in which the timer HT and the auxiliary relay HTX are also driven by a contact 1a which is closed when the switch 1 is closed and is arranged in parallel with a series circuit of the contacts 2a and 3a. Thus, the switching is stopped after switching to either high or low speed operation. Any or both of the contacts HTX1 and HTX2 may be used in the same manner as described in connection with Fig. 5.

It becomes apparent as described with respect to the above embodiments that stopping of the switching during a predetermined period of time is achieved by starting the timer (HT or LT) upon switching from low speed to high speed or vice versa.

In the embodiments described above, the stopping of the switching at the automatic switching time by the load detector has been described. However, the switching by push-buttons PBH, PBL may be also employed for the stopping of the switching.

## Claims

1. An overheat preventing system for a pole change motor A.C. motor (4) having power source switching means (1, 2, 3) for changing the number of poles of the motor for high speed operation and low speed operation;
a load driven by the output of the motor;
operating means (10) for automatically operating the switching means;
and means including limiting means (2a, 3a, HT, HTb, HTx1) for limiting the operation of the operating means; characterised in that the operating means is operative for detecting a first value (ϑ₁) of the load of the motor during low speed operation and operating the switching means in response thereto to switch the motor to high speed operation, and for detecting a second value (ϑ₂) of the load of the motor during high speed operation time and operating the switching means in response thereto to switch the motor to low speed operation, wherein the limiting means is operative for preventing operation of the switching means for a predetermined time after switching to high speed operation from low speed operation.

2. An overheat preventing system according to Claim 1, wherein the motor (4) is arranged for driving a fan (5) of a ventilation arrangement having an adjustable vane (8) for regulating wind volume and which operates at either high or low speed, the system comprising:
detector means (9) for generating a first signal (13) when the opening of the vane (8) is greater than the first value (ϑ₁) and a second signal (14) when the opening of the vane (8) is less than the second value (ϑ₂); and
means (11, 12) for supplying control power;
wherein the switching means comprises first and second circuits connected in parallel across the power supplying means and respectively including first and second switching means (2c, 1c) responsive to energization by the control power for respectively switching the motor to high and low speed operation, the first circuit further including a first contact means (2a) which closes when the first switching means is energized, second contact means (1b) which opens when the second switching means is energized, third contact means (14b) which opens in response to the second signal (14) from the detector means (9), and fourth contact means (13a) which closes in response to the first signal (13) and the first circuit having the first switching means (2c) and the first (2a), second (1b) and third contact (14b) means arranged in series with the fourth contact means (13a) arranged in parallel across the first contact means (2a), the second circuit further including a first contact means (2b) which opens when the first switching means (1c) is energized, second contact means (1a) which closes when the second switching means (1c) is energized, third contact means (13b) which opens in response to the first signal (13), and fourth contact means (14a) which closes in response to the second signal (14) and the second circuit having the second switching means and the first, second, and third contact means arranged in series with the fourth contact means (14a) arranged in parallel across the second contact means (1a).

3. An overheat preventing system according to Claim 2, wherein the first switching means includes first and second operating coils (2c, 3c) connected in parallel and wherein the second switching means comprises a single operating coil (1c).

## Patentansprüche

1. Überhitzungsverhütungssystem für einen Polumschalt-Wechselstrommotor (4) mit einer Stromversorgungs-Schalteinrichtung (1, 2, 3) zum Umschalten der Motorpolzahl für Hochdrehzahl- und Niedrigdrehzahlbetrieb;
eine von der Ausgangsleistung des Motors angetriebene Last;
eine Betätigungseinrichtung (10) zum automatischen Betätigen der Schalteinrichtung; und eine Einrichtung, die Begrenzungsmittel (2a, 3a, HT, HTb, HTx1) zum Begrenzen des Betriebs der Betätigungseinrichtung aufweist; dadurch gekennzeichnet, daß die Betätigungseinrichtung wirksam ist, um einen ersten Wert (ϑ₁) der Motorlast während des Niedrigdrehzahlbetriebs zu detektieren und die Schalteinrichtung aufgrunddessen zu betätigen, um den Motor in den Hochdrehzahlbetrieb umzuschalten, und um einen zweiten Wert (ϑ₂) der Motorlast während des Hochdrehzahlbetriebs zu detektieren und die Schalteinrichtung aufgrunddessen zu betätigen, um den Motor in den Niedrigdrehzahlbetrieb umzuschalten, wobei die Begrenzungsmittel wirksam sind, um den Betrieb der Schalteinrichtung für eine vorbestimmte Zeit nach dem Umschalten aus dem Niedrigdrehzahlbetrieb in den Hochdrehzahlbetrieb zu verhindern.

2. Überhitzungsverhütungssystem nach Anspruch 1, wobei der Motor (4) so angeordnet ist, daß er ein Gebläse (5) einer Ventilationsanordnung antreibt, das einen einstellbaren Flügel (8) zur Regelung des Windvolumens aufweist und entweder bei Hochdrehzahl oder Niedrigdrehzahl arbeitet, wobei das System aufweist:
einen Detektor (9), der ein erstes Signal (13) erzeugt, wenn die Öffnung des Flügels (8) größer als der erste Wert (ϑ₁) ist, und ein zweites Signal (14) erzeugt, wenn die Öffnung des Flügels (8) kleiner als der zweite Wert (ϑ₂) ist; und
Einrichtungen (11, 12) zur Zufuhr von Steuerstrom;
wobei die Schalteinrichtung einen ersten und einen zweiten Schaltkreis aufweist, die zu den Stromzufuhreinrichtungen parallelgeschaltet sind und jeweils eine erste und eine zweite Schalteinrichtung (2c, 1c) aufweisen, die aufgrund ihrer Aktivierung durch den Steuerstrom den Motor in den Hochdrehzahl- bzw. Niedrigdrehzahlbetrieb umschalten, wobei der erste Schaltkreis ferner aufweist: eine erste Kontakteinrichtung (2a), die bei Aktivierung der ersten Schalteinrichtung schließt, eine zweite Kontakteinrichtung (1b), die bei Aktivierung der zweiten Schalteinrichtung öffnet, eine dritte Kontakteinrichtung (14b), die aufgrund des zweiten Signals (14) des Detektors (9) öffnet, und eine vierte Kontakteinrichtung (13a), die aufgrund des ersten Signals (13) schließt, und wobei im ersten Schaltkreis die erste Schalteinrichtung (2c) und die erste (2a), zweite (1b) und dritte Kontakteinrichtung (14b) in Reihe geschaltet sind und die vierte Kontakteinrichtung (13a) zu der ersten Kontakteinrichtung (2a) parallelgeschaltet ist, wobei der zweite Schaltkreis ferner aufweist: eine erste Kontakteinrichtung (2b), die bei Aktivierung der ersten Schalteinrichtung (1c) öffnet, eine zweite Kontakteinrichtung (1a), die bei Aktivierung der zweiten Schalteinrichtung (1c) schließt, eine dritte Kontakteinrichtung (13b), die aufgrund des ersten Signals (13) öffnet, und eine vierte Kontakteinrichtung (14a), die aufgrund des zweiten Signals (14) schließt, und wobei im zweiten Schaltkreis die zweite Schalteinrichtung und die erste, zweite und dritte Kontakteinrichtung in Reihe geschaltet sind und die vierte Kontakteinrichtung (14a) zu der zweiten Kontakteinrichtung (1a) parallelgeschaltet ist.

3. Überhitzungsverhütungssystem nach Anspruch 2, wobei die erste Schalteinrichtung eine erste und eine zweite Betriebswicklung (2c, 3c) aufweist, die parallelgeschaltet sind, und wobei die zweite Schalteinrichtung eine einzige Betriebswicklung (1c) aufweist.

## Revendications

1. Système pour empêcher une surchauffe pour un moteur à courant alternatif (4) à changement de pôles, possédant un moyen de commutation de source de courant (1, 2, 3) pour changer le nombre de pôles du moteur pour le fonctionnement à vitesse haute et le fonctionnement à vitesse basse, une charge entraînée par la sortie du moteur, un moyen d'actionnement (10) pour actionner automatiquement le moyen de commutation, et un moyen comprenant un moyen de limitation (2a, 3a, HT, HTb, HTxl) pour limiter le fonctionnement du moyen d'actionnement, caractérisé en ce que le moyen d'actionnement fonctionne pour détecter une première valeur (ϑ₁) de la charge du moteur pendant le fonctionnement à vitesse basse et actionner le moyen de commutation en réponse à cette détection pour commuter le moteur sur le fonctionnement à vitesse haute, et pour détecter une seconde valeur (ϑ₂) de la charge du moteur pendant le fonctionnement à vitesse haute et actionner le moyen de commutation en réponse à cette détection pour commuter le moteur sur le fonctionnement à vitesse basse, le moyen de limitation fonctionnant pour empêcher l'actionnement du moyen de commutation durant une période de temps prédéterminée après la commutation sur le fonctionnement à vitesse haute à partir du fonctionnement à vitesse basse.

2. Système pour empêcher une surchauffe selon la revendication 1, dans lequel le moteur (4) est agencé pour entraîner un ventilateur (5) d'un agencement de ventilation ayant une vanne ajustable (8) pour régler le débit d'air et qui fonctionne soit à vitesse haute, soit à vitesse basse, le système comprenant un moyen détecteur (9) pour produire un premier signal (13) lorsque l'ouverture de la vanne (8) est supérieure à la première valeur (ϑ₁) et un second signal (14) lorsque l'ouverture de la vanne (8) est inférieure à la seconde valeur (ϑ₂), et un moyen (11, 12) pour fournir un courant de commande, système dans lequel le moyen de commutation comprend des premier et second circuits connectés en parallèle par rapport au moyen pour fournir du courant et comprenant, respectivement, des premier et second moyens de commutation (2c, 1c) réagissant à une activation par le courant de commande pour commuter le moteur, respectivement, sur le fonctionnement à vitesse haute et à vitesse basse, le premier circuit comprenant en outre un premier moyen de contact (2a) qui se ferme lorsque le premier moyen de commutation est activé, un second moyen de contact (1b) qui s'ouvre lorsque le second moyen de commutation est activé, un troisième moyen de contact (14b) qui s'ouvre en réponse au second signal (14) du moyen détecteur (9), et un quatrième moyen de contact (13a) qui se ferme en réponse au premier signal (13), et le premier circuit ayant le premier moyen de commutation (2c) et les premier (2a), second (1b) et troisième (14b) moyens de contact disposés en série avec le quatrième moyen de contact (13a) disposé en parallèle par rapport au premier moyen de contact (2a), le second circuit comprenant en outre un premier moyen de contact (2b) qui s'ouvre lorsque le premier moyen de commutation (1c) est activé, un second moyen de contact (1a) qui se ferme lorsque le second moyen de commutation (1c) est activé, un troisième moyen de contact (13b) qui s'ouvre en réponse au premier signal (13), et un quatrième moyen de contact (14a) qui se ferme en réponse au second signal (14), et le second circuit ayant le second moyen de commutation et les premier, second et troisième moyens de contact disposés en série avec le quatrième moyen de contact (14a) disposé en parallèle par rapport au second moyen de contact (1a).

3. Système pour empêcher une surchauffe selon la revendication 2, dans lequel le premier moyen de commutation comprend des première et seconde bobines d'activation (2c, 3c) connectées en parallèle et dans lequel le second moyen de commutation comprend une seule bobine d'activation (1c).
